# EUROPEAN PATENT APPLICATION

(11) **EP 2 636 581 A1**
(43) Date of publication of application: **11.09.2013**
(21) Application number: 12158312.4
(22) Date of filing: 06.03.2012
(51) Int. Cl.: B62J 9/00

(54) **Pannier system for a bicycle**

(71) Applicant: Fisher Outdoor Leisure Limited, St Albans, Hertfordshire AL1 5UG (GB)
(72) Inventor: Handoll, Robert, St. Albans AL1 5UG Hertfordshire (GB)
(74) Representative: Fluit, Jeroen

(57) **Abstract**

A pannier system for a bicycle, comprises: a clamp body (2); a bag attachment (1) attached to the clamp body (2); and at least one clip (6) movably arranged at one side of the clamp body (2) which is opposite to the other side facing the bag attachment (1).

## Description

### Technical Field

The present invention generally relates to a bicycle pannier bag attachment system. Specifically, the present invention relates to a pannier system for mounting a bag to the bicycle.

### Background of Invention

Many current bicycles have a supplementary assembly for mounting a bag or a baggage thereto. A known assembly for attaching a bag to a bicycle is shown in EP Publication No. 0760332A1 (please see Fig. 1). In the EP patent application, the assembly 100 comprises a first coupling element 200, which is secured to the bag 400, and a second coupling element 300, which can be secured to the bicycle. The first coupling has a plate-shaped hook 500 and the second coupling element 300 has a recess 310 which is open to an upper side. The plate-shaped hook 500 of the first coupling element 200 can be inserted into the recess 310 in a direction of insertion upon being coupled to the second coupling element 300 and thus the bag 400 can be mounted to the bicycle. However, the second coupling element 300 is secured to the luggage carrier by bolts 314. Thus, it is not easy for a user to adjust the assembly to set the bag at the best position. Further, the assembly 100 does not have any locking mechanism for fixing the bag and thus the bag mounted to the bicycle is unstable and may even obstruct the rider's movement.

In view of the above, there exists a need for an improved supplementary assembly for mounting a bag to a bicycle. The present invention addresses this need as well as other needs, which will become apparent to the persons skilled in the art from the disclosure of the present invention.

### Summary of the Invention

An object of the present invention may be to provide a pannier system for a bicycle which is suitable to the pannier rack of the bicycle .

Another objective of the present invention is to provide a pannier system which could be quick to attach and remove from the bicycle.

Another objective of the present invention is to provide a pannier system for a bicycle which can fasten and fix a bag mounted to the pannier.

A further objective of the present invention is to provide a pannier system for a bicycle which enables that the bag can be mounted to the pannier and/or dismounted from the pannier easily.

Accordingly, the present invention provides a pannier system for a bicycle, comprising:
a clamp body (2); and,
a bag attachment (1) being able to be attached to a side of the clamp body (2); wherein, at least one clip (6) is provided movably arranged at another side of the clamp body (2) which is opposite to the side facing the bag attachment (1) when attached.

### Brief Description of the Drawings

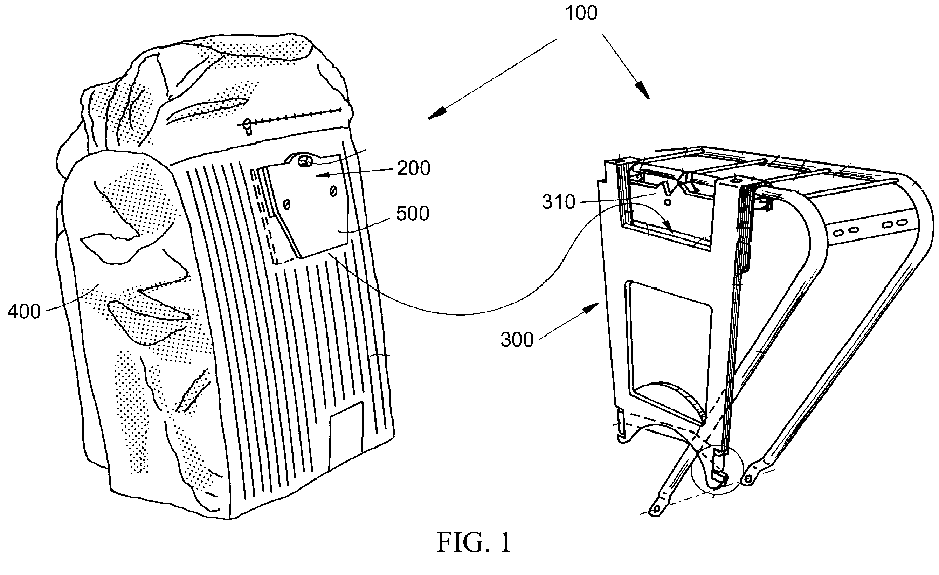

Fig. 1 shows the assembly for attaching a bag to a bicycle disclosed in EP Publication No. 0760332A1;
Fig. 2 shows the pannier system according to a preferred embodiment of the present invention, with the bag being illustrated separated from the bicycle;

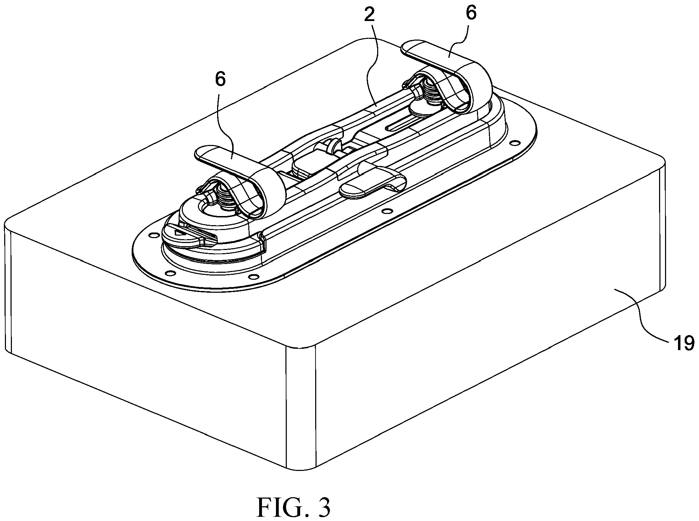

Fig. 3 shows the pannier system illustrated in Figure 1, with the bag being attached to the bicycle;
Fig. 4 is an exploded view illustrating the pannier system in accordance with a preferred embodiment of the present invention;
Fig. 5A shows the pannier system in a disengaged state; and
Fig. 5B shows the pannier system in an engaged state.

### Detailed Description of the Preferred Embodiment

The preferred embodiment of the present invention is illustrated below with reference to the drawings, and the reference numerals are shown in the figures to indicate the corresponding elements.

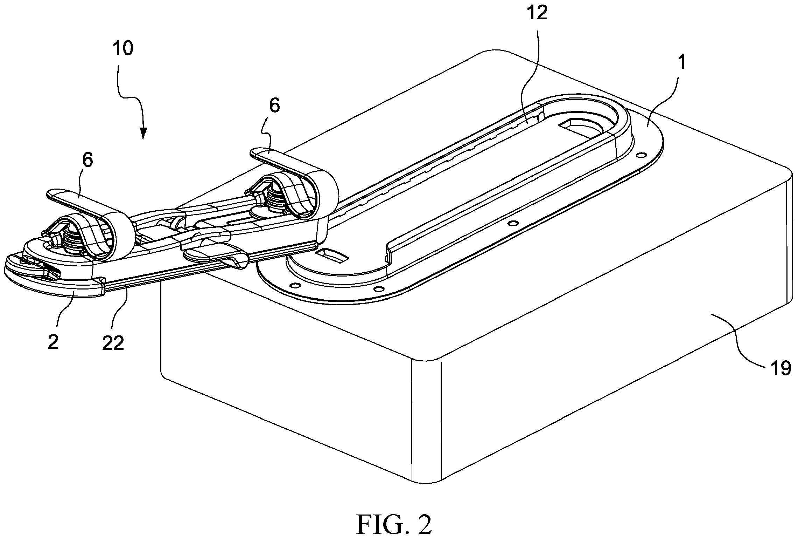

The subject invention is related to a pannier bag attachment system for mounting a bag to a bicycle. Fig. 2 shows the pannier bag attachment system according to a preferred embodiment of the invention, with the bag being illustrated separated from the bicycle. The pannier bag attachment system 10 comprises a bag attachment 1, a clamp body 2 and at least one, preferably two movable clips 6. The bag attachment 1 has a sliding slot 15 formed at one side of the bag attachment 1, while the other side of the bag attachment 1 is used for attaching to a bag 19. The clamp body 2 has a flange 22 formed at its periphery and two movable clips 6 are arranged at one side of the clamp body 2. Accordingly, the body 2 may be fixed at the bicycle pannier rack by the clips 6 (not shown) and the flange 22 of the clamp body 2 can be inserted into the sliding slot 15 of the bag attachment 1. Based on the above structure, the clamp body 2 and the bag attachment 1 are combined with each other and the bag 19 attached to the bag attachment 1 is therefore mounted to the bicycle.

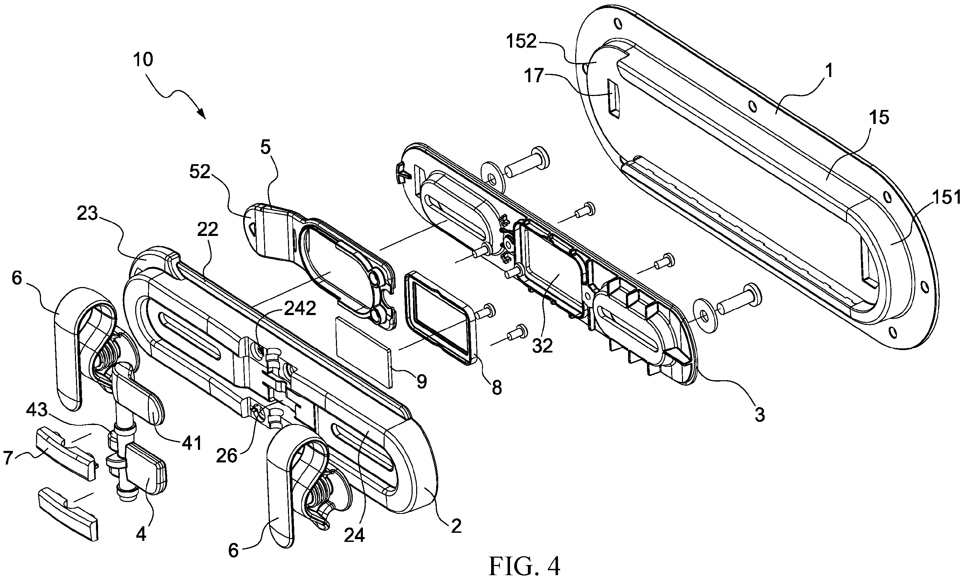

A detailed structure of the pannier system 10 in accordance with a preferred embodiment of the present invention is shown in Fig. 4, which is an exploded view illustrating the pannier 10. As shown in Fig. 4, the sliding slot 15 of the bag attachment 1 is substantially rectangular and has a curved closed end 151 and an open end 152. The clamp body 2 further has a head portion 23 at an end thereof which corresponds to the open end 152 of the sliding slot 15 so that when the clamp body 2 is inserted into the sliding slot 15 of the bag attachment 1 from the open end 152, the clamp body 2 is blocked by the closed end 151 and the head portion 23 of the clamp body 2 abuts against the open end 152 of the sliding slot 15. The sliding slot 15 of the bag attachment 1 thus engages with the flange 22 of the clamp body 2 and the bag attachment 1 and the clamp body 2 are combined with each other.

In addition, the clamp body 2 has a sliding slot 24 formed at another side which is opposite to the side facing the bag attachment 1. Further, two clips 6 used for hooking the pannier rack of the bicycle are received in the sliding slot 24 of the clamp body 2 and thus can slide along the sliding slot 24. Upon the above, since the clips 6 arranged at the clamp body 2 are movable, the clamp body 2 can be fitted a number of different pannier rack designs. Also, the user can easily adjust the position of the bag 19 while the bag 19 is mounted to the bicycle, such that the bag 19 can be set at a comfortable distance away from back of user's feet when cycling.

As shown in Fig. 4, the clamp body 2 further has a clamp body cover 3 which is attached to the side of the clamp body 2 facing the bag attachment 1. An elastic buckle 5 for locking the bag attachment 1 to the clamp body 2 is sandwiched between the clamp body 2 and the clamp body cover 3. The elastic buckle 5 has a protrusion (not shown) on the side facing the clamp body cover 3. Further, the bag attachment 1 has a recess 17 formed at the open end 152 of the sliding slot 15 and the recess 17 substantially corresponds to the protrusion of the elastic buckle 5. When the clamp body 2 is inserted into the bag attachment 1, the protrusion of the elastic buckle 5 abuts against the recess 17 by elasticity and the elastic buckle 5 buckles the bag attachment 1 such that the bag attachment 1 is locked. If the user pulls the bag attachment 1 out of the clamp body 2, the user can lift the elastic buckle 5 so as to release the clamp body 2.

In addition, the pannier system 10 has a locking mechanism which can further lock the bag attachment 1 to the clamp body 2. The structure of the locking mechanism can be explained as follows. As shown in Fig. 4, a substantially rectangular hole 32 is formed at the clamp body cover 3. A substantially rectangular insert is received in the hole 32. The insert includes a piece element 9 and a flexible element 8, wherein the flexible element 8 is made of the rubber. The piece element 9 and the flexible element 8 are stacked with each other and thus are received in the hole 32 together, wherein the flexible element 8 faces the bag attachment 1 and the piece element 9 faces the clamp body 2. Further, an aperture 26 is formed at the clamp body 2 and a receiving space 242 is defined around the aperture 26 at the side opposite to the clamp body cover 3, wherein the aperture 26 substantially aligns the hole 32. A locking switch 4 having a lever 41 and a protrusion 43 is received in the receiving space 242. Moreover, two fasteners 7 cover the locking switch 4 and are secured to the clamp body 2 such that the locking switch 4 is operably arranged at the side of the clamp body 2 which is opposite to the other side facing the bag attachment 1 and substantially aligned the aperture 26 of the clamp body 2.

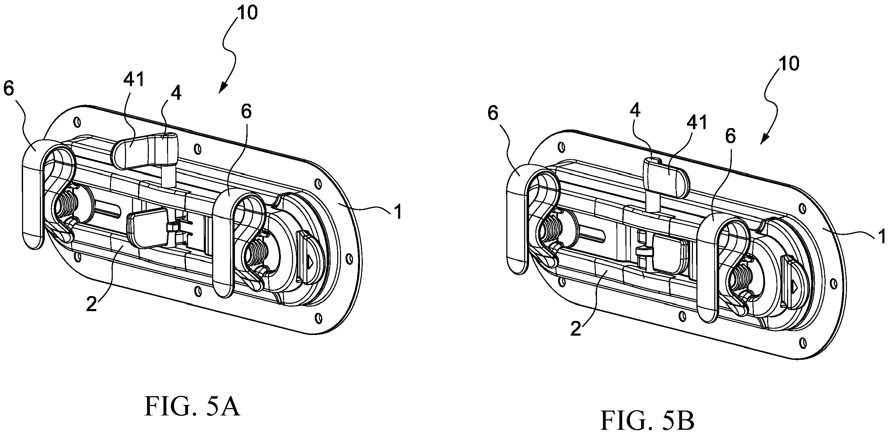

Referring to Fig. 5B, when the lever 41 of the locking switch 4 is substantially parallel to the clamp body 2, the locking mechanism does not lock the bag attachment 1 to the clamp body 2 and the pannier 10 is in the "non-engaged" state. Further, referring to Fig. 5A, when the lever 41 is pulled to be substantially perpendicular to the clamp body 2, the protrusion 43 of the locking switch 4 extends through the aperture 26 of the clamp body 2 and abuts against the piece element 9 so as to push the flexible element 8 to compress the bag attachment 1 and the bag attachment 1 is locked to the clamp body 2 and the pannier 10 is in the engaged state.

The pannier system enables the bag to be comfortably carried by the user when the bag is removed from the bicycle for carrying.

The present invention should not be considered limited to the particular examples described above, but rather should be understood to cover all aspects of the invention as fairly set out in the attached claims. Various modifications, equivalent processes, as well as numerous structures to which the present invention may be applicable will be readily apparent to those of skill in the art to which the present invention is directed upon review of the present specification. For example, the pannier bag attachment system can be mounted to the frame of the bicycle, and the different style for locking the bag attachment to the clamp body, and the number of the clips. The claims are intended to cover such modifications and devices.

## Claims

1. A pannier system for a bicycle, comprising:
a clamp body (2); and,
a bag attachment (1) being able to be attached to a side of the clamp body (2);
wherein, at least one clip (6) is provided movably arranged at another side of the clamp body (2) which is opposite to the side facing the bag attachment (1) when attached.

2. The pannier system according to Claim 1, wherein the clamp body (2) has a sliding slot (24) for receiving the clip (6) such that the clip (6) can move along the sliding slot (24).

3. The pannier system according to Claim 1, wherein the clamp body (2) has a flange (22) formed at its periphery and the bag attachment (1) has a sliding slot (15) for receiving the flange (22) of the clamp body (2), and wherein the sliding slot (15) has a closed end (151) and an open end (152), whereby the clamp body (2) with the flange (22) can be inserted into the sliding slot (15) from the open end (152) and blocked by the closed end (151) and thus the clamp body (2) and the bag attachment (1) can be combined with each other.

4. The pannier system according to any of Claims 1 to 3, wherein an elastic buckle (5) is provided which is arranged at the clamp body (2) and buckles the bag attachment (1).

5. The pannier system according to Claim 4, wherein the elastic buckle (5) has a protrusion which corresponds to a recess formed at the bag attachment (1).

6. The pannier system according to any of Claims 1 to 5, further comprising a clamp body cover (3) which is attached to the side of the clamp body (2) facing the bag attachment (1).

7. The pannier system according to Claim 6, further comprising a locking mechanism for further locking the bag attachment (1) to the clamp body (2), which comprises:
a hole (32) formed at the clamp body cover (3);
an insert received in the hole (32);
an aperture (26) formed at the clamp body (2); and
a locking switch (4) arranged at the side of the clamp body (2) which is opposite to the side facing the bag attachment (1), wherein the locking switch (4) has a lever (41) and a protrusion (43) and the protrusion (43) extends through the aperture (26) to abut against the insert while the locking switch (4) is moved by pulling the lever (41).

8. The pannier system according to Claim 7, wherein the insert includes a flexible element (8) and a piece element (9), wherein the flexible element (8) and the piece element (9) are substantially stacked with each other and the flexible element (8) faces the bag attachment (1) and the piece element (9) faces the clamping body (2).

9. The pannier system according to Claim 8, wherein the flexible element (9) is made of a rubber.

10. The pannier system according to Claim 3, wherein the clamp body (2) further comprises a head portion (23) at an end thereof which corresponds to the open end (152) of the sliding slot (15).
